# EUROPEAN PATENT APPLICATION

(11) **EP 1 617 435 A2**
(43) Date of publication of application: **18.01.2006**
(21) Application number: 05106158.8
(22) Date of filing: 06.07.2005
(51) Int. Cl.: G11C 7/16

(54) **Audio playback device and method for reproducing an audio file**

(30) Priority: 08.07.2004 KR 2004052900
(71) Applicant: Samsung Electronics Co, Ltd, Suwon-si, Gyeonggi-do 442-742 (KR)
(72) Inventor: Kim, Ji-woon, Bundang-gu Seognam-si Gyeonggi-do (KR)
(74) Representative: Geary, Stuart Lloyd

(57) **Abstract**

An apparatus and a method for reproducing an audio file are provided. When an initial reproducing mode does not satisfying a user's listening taste, a modified reproducing mode can be established to satisfy the user's listening taste. To modify the reproducing mode, a user modifies a reproducing mode for distinguished from the initial mode reproducing the audio file and modified reproducing mode information is stored. The audio file is reproduced based on one of the initial reproducing mode and the modified reproducing mode.

## Description

The present invention relates to an audio playback device, comprising means for storing a plurality of audio files and associated playback mode data and a controller operable to modify the playback mode data.

The performance of digital audio devices has developed along with developments in digital technology. Generally, digital audio devices can reproduce from an audio file. Also, digital audio devices can converts analogue audio sources, such as voices, into digital audio files and store the digital audio files.

Generally, users have their own listening tastes and digital audio devices provide various playback modes for satisfying the users' various listening tastes.

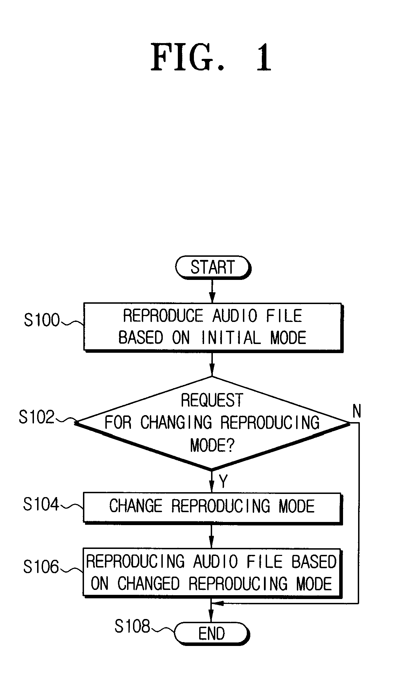

Figure 1 is a flowchart illustrating a conventional method for reproducing an audio file.

As shown in Figure 1, a digital audio device reproduces an audio file based on an initial playback mode at step S100. The initial playback mode is a mode initially established for reproducing the audio file. The user of the digital audio device presses a button on the digital audio device or uses an associated remote controller to initiate playback of the audio file.

The digital audio device determines whether the user is requesting a change in the playback mode at step S102. The user generally wants to playback the audio file using a playback mode satisfying the user's listening taste. Accordingly, if the initial playback mode does not satisfied the user, the user changes the playback mode. That is, if the user requests a change in the playback mode at step S102, the playback mode is changed at step S104. If not, the digital audio device continues to play the audio file in the initial playback mode and the method for playing the audio file ends at step S108 after complete playback of the audio file.

As described above, if the user requests a change in the playback mode at step S102, the digital audio device changes the initial playback mode at step S104. After changing the playback mode, the digital audio device plays the audio file according to the changed playback mode at step S106. By performing the above mentioned steps, the user plays the audio file and listens to the audio file as it is played.

If audio files stored in the memory of the digital audio device are played with different initial playback modes and the user wants to listen to the stored audio files based on the user's listening taste, the user must repeatedly perform the above mentioned steps for establishing the playback modes of audio files stored in the memory.

The present invention relates to an audio playback device, comprising means for storing a plurality of audio files and associated playback mode data and a controller operable to modify the playback mode data..

An audio playback device according to the present invention is characterised in that said controller is operable to store the modified playback mode data and associate said audio files with the modified playback mode data.

Additional advantageous and/or preferred features are set forth in claims 2 and 3 appended hereto.

In accordance with an aspect of the present invention, a method for reproducing an audio file is provided. The method comprises the steps of a) setting a modified playback mode distinguished from an initial playback mode for reproducing audio file data based on initial reproducing information, b) storing modified playback mode information received after setting playback mode information of the modified playback mode, and c) reproducing the audio file data according to the modified playback mode.

The playback mode information may comprise information regarding volume, genre and equalizer settings for reproducing the audio file data.

The playback mode information may be stored in a predetermined region of metadata tag for the audio file data, such as, for example, an identification three (ID3) tag of an moving pictures experts group (MPEG) audio layer 3 (MP3) file.

An audio file comprises the playback mode information and the audio file data, and the playback mode information is preferably located in a front part of the audio file data or a rear part of the audio file data.

The audio file data may be reproduced based on the initial playback mode, when the modified playback mode is not stored.

In accordance with another aspect of the present inventive concept, an audio reproducing device is provided. The devise comprises an input unit for receiving playback mode information that is distinguishable from initial playback mode information for setting an initial playback mode that reproduces audio file data based on the initial reproducing information, a controller for setting the playback mode information input from the input unit; a storing unit for storing a modified playback mode set with the playback mode information, and a decoding unit for decoding the audio file data by using stored playback mode information according to a control of the controller.

The audio reproducing device preferably comprises an encoding unit for encoding the modified playback mode information input from the controller and transmitting the modified playback mode information to the storing unit, and a displaying unit for displaying information input from the input unit and a state of the audio reproducing device.

Also, there may be provided a method for reproducing an audio file, the method comprising the steps of establishing a modified reproducing mode distinguished from an initial reproducing mode for reproducing an audio file data based on initial reproducing mode information, storing modified reproducing mode information received after establishing as reproducing mode information the modified reproducing mode; and reproducing the audio file data according to the modified reproducing mode.

Embodiments of the present invention will now be described, by way of example, with reference to Figures 2 to 5 of the accompanying drawings, in which:
Figure 1 is a flowchart illustrating a conventional method for reproducing an audio file;
Figure 2 is a flowchart illustrating steps for encoding playback mode information of audio file data in accordance with an exemplary embodiment of the present invention;
Figure 3 is a diagram illustrating an audio file structure in accordance with an exemplary embodiment of the present invention;
Figure 4 is a flowchart illustrating steps for decoding audio file data based on playback mode information in accordance with an exemplary embodiment of the present invention; and
Figure 5 is a diagram illustrating a digital audio device in accordance with an exemplary embodiment of the present invention.

Well-known functions or constructions are not described in detail for clarity and conciseness.

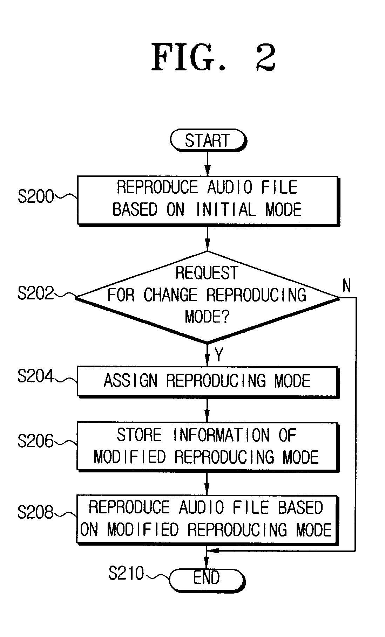

Steps for encoding modified playback mode information will now be described in detail with reference to the Figure 2.

At step S200, the digital audio device plays an audio file based in an initial playback mode. The user of the digital audio device typically presses a button on the digital audio device, or uses an associated remote controller, to initiate playback of the audio file.

At step S202, the digital audio device determines whether the user has requested a change in the initial playback mode. The user of the digital audio device will generally want to play the audio files based on a playback mode satisfying the user's listening taste. Accordingly, if the initial playback mode does not satisfy the user's listening taste, the user requests a change in the initial playback mode. If the user requests a change in the playback mode at step S202, the playback mode is modified according to the user's request at step S204. Otherwise, the playback of the audio file continues according to the initial playback mode and the method of playing the audio file is terminated at step S210 after the audio file has been played completely.

As described above, if the user requests a change in the initial playback mode at step S202, the digital audio device assigns a predetermined playback mode for playing the audio file at step S204. The assigned playback mode is a modified playback mode. The playback mode is constructed with a plurality of elements and the elements assignable by a user are explained in greater detail below. The digital audio device stores information about the modified playback mode at step S206. The digital audio device continues playing the audio file data, now according to the modified playback mode at step S208.

The elements of the playback mode information will now be explained.

Exemplary elements are volume, genre and equalizer settings. The genre represents a musical type classification, e.g. classical, rock and jazz. Also, by setting the equalizer, the tone of the audio file is corrected or noises of the audio file are eliminated according to the user's taste.

Steps for changing the elements of a playback mode will now explained in detail.

The user may change the volume set within the initial playback mode. That is, if the volume set for the initial playback mode is too low, the user changes the volume by modifying the volume information within the initial playback mode definition. If the user wants to playback an audio file as "classic" when the audio file set as "jazz", the user changes the genre of the playback mode to "classic" for playing back the audio file classically.

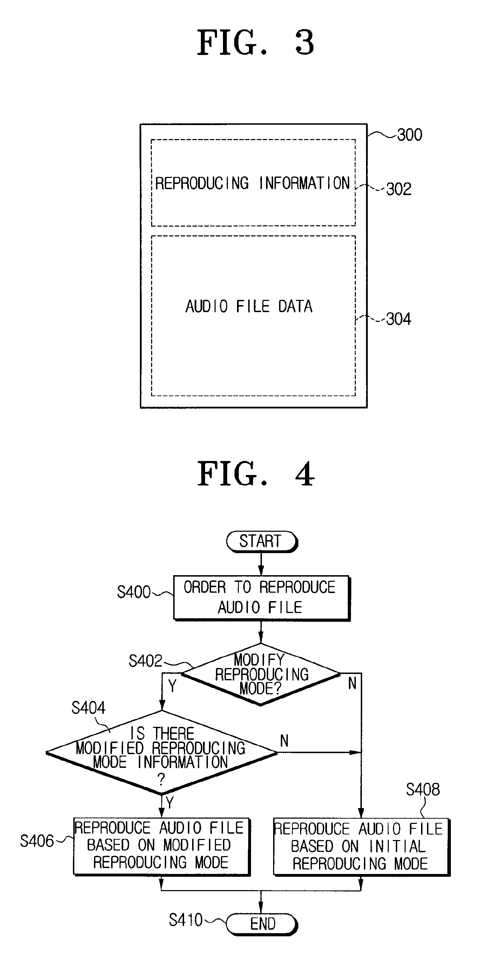

As shown in Figure 3, the audio file 300 comprises playback (sometimes referred to "reproducing") information 302 and audio file data 304. The playback information 302 comprises initial playback information and modified playback information.

There may be various ways to store the modified playback information in the storing unit. In an exemplary embodiment of the present invention, a metadata tag such as an identification 3 version 2 (ID3v2) tag is used for storing the modified playback information. The ID3v2 comprises frame identifications such as 'X', 'Y', and 'Z'. Accordingly, the user uses one of 'X', 'Y', and 'Z' to encode the modified playback information.

Generally, the volume may be set from 0 % to 100 %. When the user wants to set the volume to 50% of maximum for play back of the audio file, this is expressed as a hexadecimal (HEX) code such as the following.
'5A 56 4F 4C 00 00 00 04 00 00 00 00 00 32'

The exemplary HEX code comprises 14 bytes and is divided into four parts each of which represents a tag, a size, a flag and information.

Among the 14 bytes of the HEX code, the first 4 bytes of the HEX code (5A 56 4F 4C) represent 'ZVOL' where 'Z' is a frame identifier and 'VOL' is the volume. The next 4 bytes of the HEX code (00 00 00 04) represents the size of information. Thus, the size of information is 4 bytes. The next 2 bytes of the HEX code (00 00) represent that a flag is not set. The last 4 bytes of the HEX code (00 00 00 32) represent that the volume is set at 50% of the maximum. As mentioned above, the HEX code represents that the information is represented by 4 bytes. As described above, the modified playback mode information is converted to a HEX code and stored in the storing unit.

In this embodiment, the modified playback mode information is preferably located in the front part of the audio file data. However, the modified playback mode information may be located in a rear part of the audio file data or any other suitable location. Also, the user may use other codes to store the modified reproducing information.

By referring to Figure 4, the steps for decoding audio file data stored in a storing unit are explained in detail.

At step S400, the digital audio device receives a command to playback the audio file data stored in the storing unit from a user. The user may use a button or a remote control to generate the playback command.

At step S402, the digital audio device selects one of at least two of playback modes. The user also uses the buttons or the remote controller to select one of the playback modes. In an exemplary embodiment of the present invention, there is an initial playback mode and a modified playback mode. If the digital audio device selects a different playback mode to the initial playback mode at step S402, the digital audio device determines whether there is a modified playback mode stored in the storing unit at step S404. If the digital audio device selects not to modify the initial playback mode, the digital audio device reproduces the audio file based on the initial playback mode at step S408.

At step S404, the digital audio device determines whether there is the modified playback mode is already stored in the storing unit. If modified playback mode is not stored in the storing unit and the user selects to modify the playback mode, the audio file can not be played back according to the user's taste. Therefore, if there is no modified playback mode at step S404, the audio file is played back based on the initial playback mode at step S408. If there is a modified playback mode stored in the storing unit, the digital audio device plays back the audio file based on the modified playback mode at step S406.

As mentioned above, the digital audio device plays back the audio file data using the modified playback mode information at step S406 when the modified playback mode is stored in the storing unit. The method for playing back the audio file ends at step S410 after the audio file is played back. Also, the digital audio device plays back the audio file data using the initial playback mode information at step S408 if there is no modified playback mode. The method of Figure 4 ends at step S410 after playing back the audio file according to the initial playback mode information.

Figure 4 illustrates steps for playing the audio file data using the modified playback mode information or the initial playback mode information. However, the user may modify the playback mode according to the steps of Figure 2 during the playing of the audio file according to the steps of Figure 4.

In Figures 2 to 4, the above mentioned steps are performed for each of the audio files. However, a single set of modified playback mode information may be implemented to all stored audio files in the storing unit according to a setting of the user.

Also, in the example of Figures 2 to 4, a single modified playback mode is attributed to an audio file. However, as will be appreciated by those of ordinary skill in the art, two or more modified playback modes may also be attributed to an audio file.

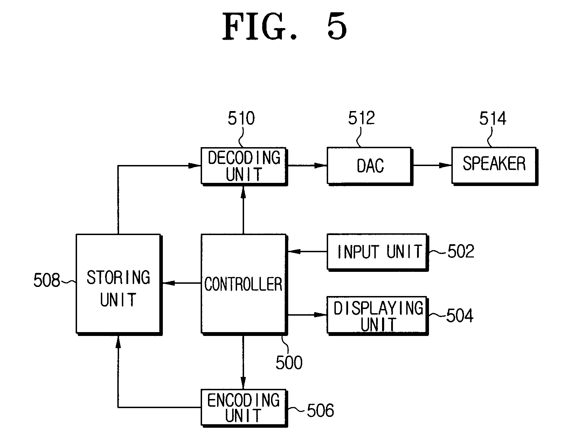

As shown in Figure 5, the digital audio device comprises a controller 500, an input unit 502, a displaying unit 504, an encoding unit 506, a storing unit 508, a decoding unit 510, a digital/analog converter (DAC) 512 and a speaker 514. Hereinafter, the digital audio device is explained in detail by referring to Figure 5.

The input unit 502 comprises a button or a remote controller and acts as a user interface providing necessary information to the device. The necessary information comprises play back information, modification information and modified playback mode information. The playback information is information about playing audio file data stored in the storing unit. The modification information is information about modifying the playback mode.

The displaying unit 504 displays the information received from the input unit 502. Also, the displaying unit 504 displays operational states of the digital audio device.

The encoding unit 506 encodes the modified playback information from the input unit 502 as well as any other necessary information. This is done under the control of the controller 500.

The storing unit 508 receives the encoded information from the encoding unit 506 and stores the received information. The storing unit 508 also stores audio file data, initial playback information, modified playback mode information and necessary information for operating the digital audio device.

The decoding unit 510 decodes audio file data stored in the storing unit 508 under the control of the controller 500. The audio file data is decoded by using the initial playback mode information or the modified playback mode information.

The DAC 512 converts decoded digital data from the decoding unit 510 into analogue data. The analogue data is transmitted to the speaker 514. The speaker 514 outputs sound based on the analogue waveform.

As mentioned above, embodiments of the present invention establish a playback mode of an audio file stored in a storing unit according to a user's listening taste. Accordingly, unnecessary key operations are eliminated by playing the audio file according to a stored playback mode. Also, the number of key operations is reduced by implementing a single set of modified playback mode information which is applied to all audio files stored in the storing unit.

## Claims

1. An audio playback device, comprising means (508) for storing a plurality of audio files and associated playback mode data and a controller (500) operable to modify the playback mode data, **characterised in that** said controller (500) is operable to store the modified playback mode data and associate said audio files with the modified playback mode data.

2. An audio playback device according to claim 1, wherein the controller (500) is operable to store the modified playback mode data with each of the audio files.

3. An audio playback device according to either one of claims 1 or 2, wherein the controller (500) is operable to output each audio file in accordance with the modified playback mode data.

4. A method for reproducing an audio file, the method comprising the steps of:
establishing a modified reproducing mode distinguished from an initial reproducing mode for reproducing an audio file data based on initial reproducing information mode;
storing modified reproducing mode information received after establishing as reproducing mode information the modified reproducing mode; and
reproducing the audio file data according to the modified reproducing mode.

5. The method of claim 4, wherein the reproducing mode information comprises information related to volume, genre and equalizer settings for reproducing the audio file data.

6. The method of claim 5, wherein the reproducing mode information is stored in a predetermined region of a metadata tag.

7. The method of claim 6, wherein the metadata is an identification 3 version 2 (ID3v2) tag.

8. The method of claim 4, wherein an audio file comprises the reproducing mode information and the audio file data, and the reproducing mode information is stored in one of a front part of the audio file data and a rear part of the audio file data.

9. The method of claim 4, wherein the audio file data is reproduced based on the initial reproducing mode, when the modified reproducing mode information is not stored.

10. An audio reproducing device, comprising:
an input unit for receiving reproducing mode information distinguishable from initial reproducing mode information for constructing an initial reproducing mode that reproduces audio file data based on the initial reproducing mode information;
a controller for setting the reproducing mode information input from the input unit;
a storing unit for storing a modified reproducing mode information constructed with the reproducing mode information; and
a decoding unit for decoding the audio file data by using said stored reproducing mode information according to a control of the controller.

11. The audio reproducing device of claim 10, wherein the reproducing mode information comprises information related to volume, genre and equalizer settings for reproducing the audio file data.

12. The audio reproducing device of claim 10, further comprising an encoding unit for encoding the modified reproducing mode information input from the controller and transmitting the modified reproducing mode information to the storing unit.

13. The audio reproducing device of claim 10, further comprising a displaying unit for displaying information input from the input unit and a state of the audio reproducing device.

14. The audio reproducing device of claim 10, wherein the storing unit stores the reproducing mode information in one of a front part of the audio file data and a rear part of the audio file data.

15. The audio reproducing device of claim 10, wherein the controller causes reproduction of the audio file data based on the initial reproducing mode when the modified reproducing mode is not stored.
